# EUROPEAN PATENT SPECIFICATION

(11) **EP 2 729 791 B1**
(45) Date of publication and mention of the grant of the patent: **21.10.2020**
(21) Application number: 12748545.6
(22) Date of filing: 05.07.2012
(51) Int. Cl.: G01N 23/02, G01N 23/20, G01N 23/22

(54) **SAMPLE PRESENTATION DEVICE FOR RADIATION-BASED ANALYTICAL EQUIPMENT**
PROBENPRÄSENTIERVORRICHTUNG FÜR STRAHLUNGSBASIERTES ANALYSEGERÄT
DISPOSITIF DE PRÉSENTATION D'ÉCHANTILLON POUR ÉQUIPEMENT ANALYTIQUE À RAYONNEMENT

(30) Priority: 05.07.2011 ZA 201104917; 14.06.2012 ZA 201204359
(43) Date of publication of application: 14.05.2014
(73) Proprietor: University of Cape Town, Cape Town 7700 (ZA)
(72) Inventor: CLAEYS, Michael Christian Maximilian, 8005 Western Cape (ZA); FISCHER, Nico Frederik, 68131 Mannheim (DE)
(74) Representative: Protector IP AS
(86) International application number: PCT/IB2012/053438
(87) International publication number: WO 2013/005180

(56) References cited:
- DE-C1- 19 842 797
- FR-A1- 2 856 793
- US-A- 3 254 212
- US-A- 3 807 383
- US-A1- 2007 163 799
- US-A1- 2016 121 537
- Anonymous: "Compression Seal Fitting Solutions - The Complete Guide to Pressure and Vacuum Assemblies", Conax Technologies Company Catalogue , vol. 5001C 2007, page 6,last, XP002687758, Retrieved from the Internet: URL:http://www.mercado-ideal.com/catalogos c/CONAX%20TECHNOLOGIES%20PRESSURE%20AND%20 VACUUM%20ASSEMBLIES.pdf [retrieved on 2012-11-22]
- BARE ET AL: "Design and operation of a high pressure reaction cell for in situ X-ray absorption spectroscopy", CATALYSIS TODAY, ELSEVIER, NL, vol. 126, no. 1-2, 28 July 2007 (2007-07-28), pages 18-26, XP022173916, ISSN: 0920-5861, DOI: 10.1016/J.CATTOD.2006.10.007
- FREDERIC C. MEUNIER: "The design and testing of kinetically-appropriate operando spectroscopic cells for investigating heterogeneous catalytic reactions", CHEMICAL SOCIETY REVIEWS, vol. 39, no. 12, 1 January 2010 (2010-01-01), page 4602, XP055045097, ISSN: 0306-0012, DOI: 10.1039/b919705m
- JACQUES S D M ET AL: "Recent progress in the use of in situ X-ray methods for the study of heterogeneous catalysts in packed-bed capillary reactors", CATALYSIS TODAY, ELSEVIER, NL, vol. 145, no. 3-4, 30 July 2009 (2009-07-30), pages 204-212, XP026393785, ISSN: 0920-5861 [retrieved on 2009-03-21]
- Unknown: "Chapter 1: Overview of Heat Transfer", EN43ME Lecture Notes, 1 January 2002 (2002-01-01), pages 1-3, XP055379928, Retrieved from the Internet: URL:http://emerald.tufts.edu/as/tampl/en43 /lecture_notes/ch1.html [retrieved on 2017-06-09]
- Unknown: "Chapter 2: Cooking Methods and Materials", EN43ME Lecture Notes, 1 January 2002 (2002-01-01), pages 1-3, XP055379929, Retrieved from the Internet: URL:http://emerald.tufts.edu/as/tampl/en43 /lecture_notes/ch2.html [retrieved on 2017-06-09]
- Paul G. Hewitt: "Chapter 15 - Heat Transfer" In: "Conceptual Physics", 1 January 1989 (1989-01-01), Harper Collins, XP055379935, ISBN: 978-0-673-39847-5 pages 268-269,

## Description

### FIELD OF THE INVENTION

This invention relates to a sample presentation device for radiation-based analytical equipment and, more particularly, radiation-based analytical laboratory equipment such as X-ray diffraction as well as synchrotron and neutron based equipment.

Still more particularly, the invention relates to a sample presentation device for use in association with equipment such as laboratory equipment that permits the flow of fluids, especially but not necessarily gases, over or through a sample being examined, typically at elevated temperature and pressure. The sample being examined may be any crystalline material, for example a heterogeneous catalyst for the purpose of carrying out a suitable catalytic reaction.

### BACKGROUND TO THE INVENTION

Current trends in heterogeneous catalysis research as well as in material sciences and related sciences have led to an increased drive to apply known characterisation techniques, such as powder X-ray diffraction, under elevated temperatures, pressures and changing gas and/or liquid atmospheres. Commercially available in-situ X-ray diffraction chambers (for example those produced by the Austrian company Anton-Paar) do facilitate the study of materials at elevated temperatures (up to 900°C), pressures (up to 10 bar) and under different gas atmospheres.

However, their design entails a fairly large volume reaction chamber (approx. 500 ml) into which the sample is inserted on a plate-like sample holder. The most well known example known to applicant in their range is a model known as XRK. A large volume reaction chamber of this nature does not allow for a rapid changeover of gasses fed to the reaction chamber. As a result, an appreciable period of time elapses when the gas composition in the feed is changed before the reaction to the change can be studied. Secondly, those reaction chambers are provided with beryllium (category 1 carcinogen) or similar X-ray invisible windows that limit the temperatures and pressures that can be applied to the reaction chamber. Thirdly, they are unable to accommodate liquid products and/or corrosive or oxidising gasses and vapours such as water either in the feed or in the reaction products stream such as would occur in a fixed bed reactor system. These cells are thus generally limited to dry conditions that do not result in corrosion.

The bulky design of the reactor chamber and the plate-like sample holder further does not allow a realistic plug flow like flow pattern through the powder sample due to the presence of dead volumes and poorly defined concentration gradients. This does not allow the determination of kinetic information in, for example catalyst testing, and always leaves a doubt whether the chosen conditions do actually represent the conditions in real live applications.

A sample presentation device using a glass capillary as the reaction chamber has been proposed in French patent number FR2856793 that, as far as applicant is aware, has not yet been made commercially available. The capillary has an electrical heating element carried in a sleeve that substantially surrounds the capillary tube and a thermocouple associated with that sleeve is employed to measure the temperature of the sleeve from which the temperature within the capillary reaction chamber is inferred. The temperature range is stated to be up to 250°C with a pressure range up to 5 bars. An important feature of the device described is that the reaction chamber can be oscillated about its own axis in order to better present the sample within the capillary reaction chamber to the X-radiation. As far as applicant is concerned the device described does not fulfill requirements and also has shortcomings in its range of operation. No particular mention is made of liquids or vapours in the feed or product streams.

Synchrotron based applications rely on capillaries much more as reaction vessels and plug flow reactors for studies in catalysis, biology and material sciences. However the small number of synchrotron facilities available worldwide and their enormity in size and cost render the use of a synchrotron out of the reach of, and generally unavailable to, the majority of researchers and small-scale facilities. Laboratory powder X-ray diffractometers are, on the other hand, wide spread and are commonly available and frequently used in modern research and other facilities. It is also noted that, as far as the applicant is aware, synchrotrons typically employ a hot air gun to effect heating of the sample which is a technique that is unsuitable for laboratory equipment.

S. R. Bare et al., Design and operation of a high pressure reaction cell for in situ X-ray absorption spectroscopy, Catalysis Today, vol. 126, no. 1-2, 28 July 2007, pages 18-26 describes a high pressure catalysis reaction cell for transmission x-ray absorption spectroscopy measurements, the reaction cell being bolted on a precision x-y translation stage, typically found at XAFS beam lines.

Applicant believes that there is a need to provide a sample presentation device for radiation-based analytical equipment that is simple, cost effective, and yet has practical operating ranges.

Applicant also believes that there is a need to provide a sample presentation device for radiation-based analytical equipment that is able to accommodate liquids and vapours in the feed and product streams.

### SUMMARY OF THE INVENTION

In accordance with this invention there is provided a sample presentation device for radiation-based analytical equipment according to claim 1. Further features of the invention provide for the carrier and terminal member to each be made of a solid block of thermally conductive material in which instance they are preferably configured for receiving a removable heater insert, typically in a blind hole; for the terminal member to have a passage generally coaxial with the connector for receiving a communications conductor carrying a temperature sensor, typically a thermocouple, at its end that is operatively located generally centrally within a capillary or alternatively at a suitable position outside of the tube; for the radiant heater to be an infrared heater; for a generally channel shaped reflective shield to be provided for directing radiation from the radiant heater towards a position to be occupied by a capillary tube, in use; and for the end of each flow path remote from its associated connector to have an axis extending at right angles to that of the connector.

Still further features of the invention provide for the mounting base to be a metal plate; for the carrier to be attached to the mounting base by way of a slide and guide arrangement that may be of a inwardly lipped channel configuration allowing adjustable positioning of the carrier on the mounting base along at least one axis that is typically a vertical axis in use, but may in the alternative be a horizontal axis; for the arm to be adjustable in position in the direction of its own length relative to either the carrier or the terminal member to facilitate installation and removal of a capillary tube between the connectors.

One form of connector that is particularly preferred is a compression fitting for forming an effective seal between a body part and an outer surface of a capillary tube wherein the compression fitting comprises a body having a passage therein, a cavity coaxial with the passage for accommodating a seal, a generally cylindrical seal accommodated within the cavity wherein the seal is made of a suitably deformable but incompressible material and has a bore passing axially through the seal for accommodating a capillary tube in use, a follower movable into and out of the cavity in order to compress the seal in the axial direction, and a screw threaded cap for urging the follower into the cavity, wherein the follower and body have cooperating formations associated therewith whereby rotation of the follower relative to the body is prevented and movement of the follower relative to the body is permitted in an axial direction only.

Such cooperating formations may include a pin or key having its length extending parallel to the axis of the body and laterally offset therefrom with the pin or key cooperating with a hole or groove in the body and a corresponding hole or notch in a flange extending radially outwards from the periphery of the follower. The outer diameter of the seal is preferably equal to at least three times the diameter of the bore through it and generally from four to six times the diameter of the bore through it. The seal may be made of a suitably temperature resistant material, especially a suitable silicon rubber material.

The term capillary as used in this specification is intended to include all appropriate and suitable diameters of tubes that are typically made of specialist glass such as borosilicate glass and quartz glass; specialist polymer material; or grown sapphire; in each instance selected to be suitably transparent to radiation, especially X-radiation. Of course the diameter of the capillary will be limited by the elevated pressures to be used and, in addition, the wall thickness of the capillary tube should be such that radiation losses are minimized. Typically the diameter will be within the range of 0.2 to 2 mm with a commonly used size being of the order of 1 mm with a wall thickness of about 0.01 mm.

It is envisaged that a sample presentation device according to the invention should be capable of operating at temperatures of up to 500°C and more and at pressures of up to 10 bars and more. It is also possible to use the sample presentation device in instances in which feed and product streams from, for example, a catalyst sample, can include liquids or vapours or both in which instance the carrier and terminal member can be heated appropriately, for example to temperatures of between 200°C and 300°C in the instance of an X-ray diffraction analysis of a Fischer-Tropsch reaction utilizing an alumina-supported cobalt catalyst.

It is to be mentioned that it is considered that the invention is particularly well-suited for application in laboratory X-ray diffraction equipment that operates on a reflection basis while it can be used on the transmission basis in the instance of a synchrotron. The invention may also be advantageously applicable in extended X-ray absorption fine structure (EXAFS) and X-ray absorption near edge structure (XANES) analyses.

The above and other features of the invention will become more apparent from the following description of one embodiment thereof with reference to the accompanying drawings.

### BRIEF DESCRIPTION OF THE DRAWINGS

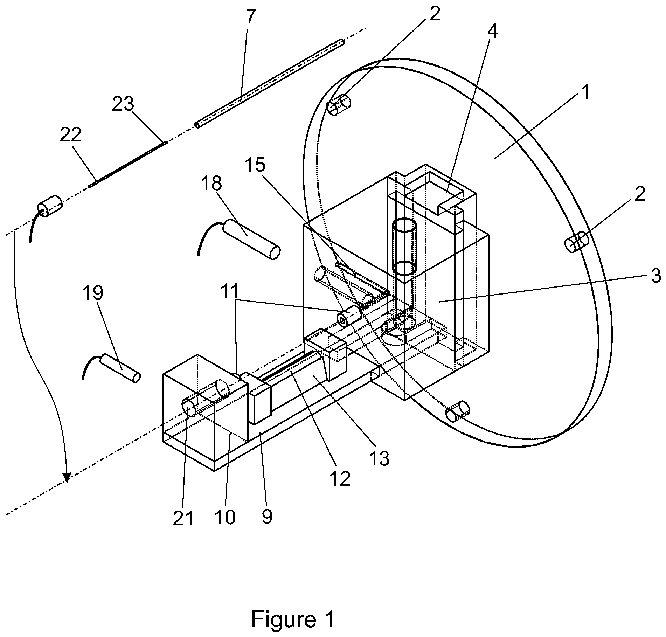

In the drawings:-
- Figure 1: is an isometric view of one embodiment of sample presentation device according to the invention with detail omitted for purposes of clarity;
- Figure 2: is a side view thereof;
- Figure 3: is a front view thereof;
- Figure 4: is an enlarged sectional elevation of one preferred form of connector in the form of a compression fitting;
- Figure 5: is a cross-section thereof taken a long line V-V in Figure 4; and,
- Figure 6: is a view similar to Figure 4 showing a slight variation thereof.

### DETAILED DESCRIPTION WITH REFERENCE TO THE DRAWINGS

In the embodiment of the invention illustrated in the drawings, a sample presentation device that is particularly designed for use on analytical X-ray diffraction equipment comprises a mounting base in the form of a metal plate (1) shaped and configured for mounting on a particular item of radiation-based analytical equipment, in this instance in the form of a Bruker D8 X-Ray Diffractometer that operates on the basis of reflected radiation. The metal plate has holes (2) for securing it to the laboratory equipment, and typically to the goniometer of the diffractometer, generally in an operatively vertical plane.

The mounting plate supports a carrier (3) in the form of a solid block of thermally conductive material, typically stainless steel, attached to the mounting base by way of, in this instance, a vertically orientated slide and guide arrangement (4) that is of an inwardly lipped channel configuration. A thumbwheel (5) and associated screw threaded components (not illustrated) allows the vertical position of the carrier to be adjusted relative to the mounting plate in order to align a sample holder in the form of a capillary tube (7) with the zone of radiation, in use.

The capillary tube in this embodiment of the invention is made of borosilicate glass and has an outer diameter of 1 mm and an inner diameter of 0.98 mm. Typically, the length of a capillary tube will be about 75 mm but different lengths can be used according to requirements. It is to be noted that the pressure rating of the capillaries is higher than that of commercially available large in-situ cells.

A generally horizontal arm (9) extends from the carrier at right angles to the direction of adjustment of the carrier on the mounting plate and such arm has at its opposite end a terminal member (10) also in the form of a solid stainless steel block.

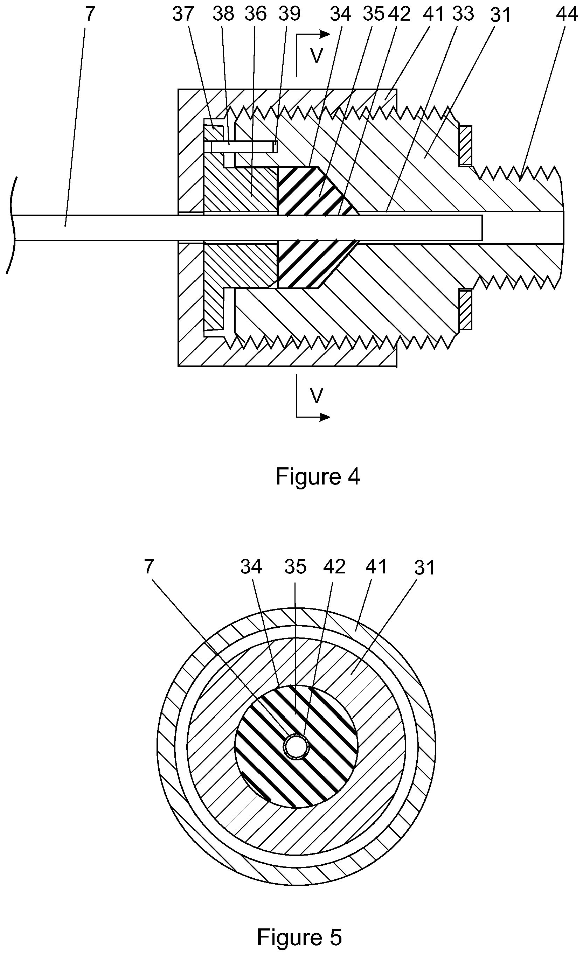

The carrier and terminal member each have coaxial connectors (11) for receiving the two opposite end regions of a capillary tube (7) that forms a reaction cell. The connectors are conveniently of the compression seal type and may employ a graphite ferrule or an elastic o-ring for compressive sealing onto the outer surface of the capillary tube in appropriate instances. However, the connectors are preferably in the form of compression seals of the type that is more fully described below with reference to Figures 4 and 5 or Figure 6 of the accompanying drawings. Such compression seals are especially suitable in the instance of fragile or deformable capillary tubes. Reverting to the general construction, the arm is adjustable in the direction of its own length relative to the carrier so that the spacing between the carrier and terminal member can be selected according to the length of the particular capillary tube that is in use. This also enables the terminal member to be moved outwards in order to facilitate the introduction or removal of a capillary tube relative to the connectors.

Mounted on the arm is a radiant infrared heater (12) that is radially offset from an installed capillary tube for heating it and a sample contained therein. In order to achieve optimum usage of the heat given off by the infrared heater, a generally channel shaped reflective shield (13) may be provided for reflecting radiation from the radiant heater towards a position occupied by a capillary tube, in use.

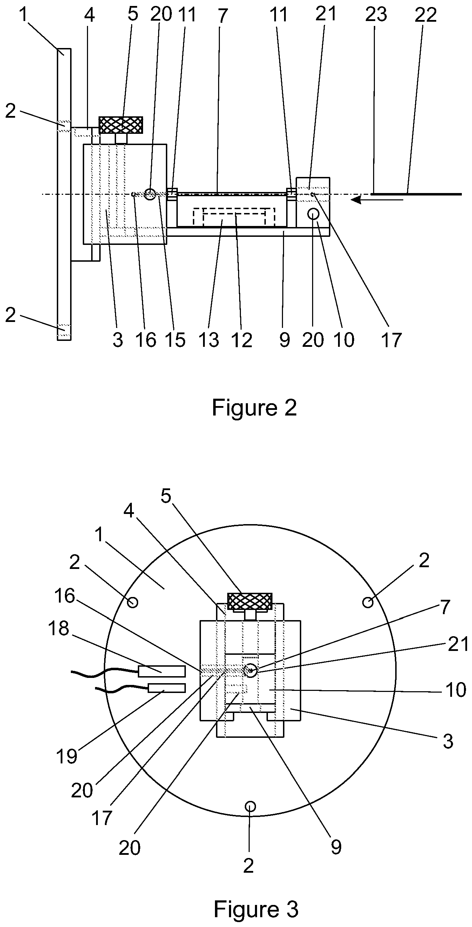

The carrier (3) and terminal member (10) each have flow paths (15) passing therethrough and communicating with the associated coaxial connector. The end (16, 17) of each flow path remote from its associated connector (see Figure 2) has the axis of its inlet/outlet extending at right angles to the axes of the connectors.

The flow paths are arranged to be heated by removable heating inserts (18, 19) that are of right circular cylindrical shape so as to be received in a blind hole (20) in the carrier or terminal member. This arrangement ensures that the entire block, in each instance, may be heated, as and when required. The arrangement is such that the carrier and terminal member may be heated to temperatures which are high enough to avoid condensation of vapours in the feed or the reaction products..

In the instance of the terminal member a passage (21) is provided coaxially with the connector for receiving a communications conductor (22) carrying a thermocouple (23) at its end that is operatively located generally centrally within a capillary tube.

Turning now to the compression seal that is illustrated in Figures 4 and 5 of the drawings, a compression fitting is provided that is particularly adapted to form an effective seal between a body part (31) and an outer surface of the thin walled glass capillary tube (7). A passage (33) in the body opens into a cavity (34) that is coaxial with the passage.

The cavity is of generally right circular cylindrical shape with its inner end being formed into a truncated conical shape. The cavity accommodates a seal (35) that is of generally complementary shape so as to conform to the shape of the cavity whilst leaving an unoccupied end region that receives a generally cylindrical follower (36) that is movable into the cavity in order to apply an axially directed compressive force to the seal.

The follower has at its outer end a radially extending flange (37) that has a hole through it and through which a formation in the form of a pin (38) passes. The pin extends out of a blind hole (39) in the body with its axis parallel to the axis of the body but laterally offset therefrom.

A coaxial union nut in the form of a cap (41) is internally screw threaded to cooperate with an external screw thread on the body so that the cap can be screwed onto the body to urge the follower into the cavity in order to compress the seal axially in the well-known manner of a compression seal. The presence of the pin and cooperating hole through the flange of the follower ensure that movement of the follower is strictly axial and that no twisting force is transmitted to the tube.

The seal has a bore (42) passing axially through it with the dimensions of the bore of being appropriate to the outer diameter of the capillary tube (7) with which the fitting is to be used. As a general rule therefore different seals will be provided for different diameter capillary tubes. The outer diameter of the seal is, in this instance, equal to at least five times the diameter of the bore through it. This type of dimension ensures that there is an adequate body of the material from which the seal is made to distribute the sealing force substantially evenly over the outer surface of the capillary tube. In this particular instance the bore through the seal is dimensioned to accommodate a capillary tube having an outer diameter of about 1 mm.

The seal is made of a suitably deformable but incompressible material and in this particular instance, it is made of a suitable silicon rubber that exhibits good properties at somewhat elevated temperatures and pressures.

The body has a screw threaded spigot (44) extending from the end thereof opposite the cap and the screw threaded spigot can be used to attach the fitting to a cooperating socket in the carrier (3) and terminal member (10) respectively.

With a capillary tube in position in the fitting, the cap can simply be tightened by using finger force only in order to achieve a highly effective seal on the outer surface of a capillary tube. Such a seal may be capable of withstanding an internal pressure of about 10 bars, or more.

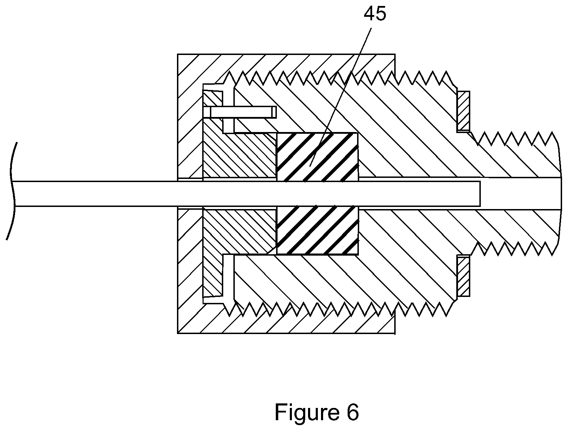

The shape of the seal can be varied widely and a simple right circular cylindrical shape, as indicated by numeral (15) in Figure 6, is also expected to operate effectively.

It is to be noted that a compression seal of this nature has also been successfully applied to capillary tubes made of a temperature resistant polymer that allows for very high X-ray flux with almost no intensity losses such as a polymer sold under the name KAPTON, by the international company DUPONT. Such a material may not be fragile, but may be somewhat deformable and require internal support using an internal support tube (e.g. made from stainless steel) which has an outer diameter roughly matching the inner diameter of the polymer capillary tube. Such an internal support tube would be placed just under the seal.

A sample presentation device as described above is capable of operating at temperatures of up to and possibly exceeding 500°C and pressures of up to and possibly exceeding 10 bars.

In use, a permeable plug is installed at one end region of a capillary tube that is then filled with the sample to be tested, possibly a catalyst. Whilst filling the capillary tube, the thermocouple may be positioned generally centrally within the tube. The thermocouple would not normally be in the middle of the capillary but a short distance away so as to be outside of the beam path, i.e. about 1 cm or so away from the centre. It must be ensured that the thermocouple is not "seen" by the radiation. The end from which filling took place is then closed with another permeable plug.

Although preferable for accurate control, it is not an absolute necessity to have the thermocouple inside the capillary. It can also be outside, but located as close as possible to the reactor (again outside of the beam path). This allows the use of thermocouples with larger diameters to be employed.

The capillary tube is then located in the device and the connectors are tightened in order to seal onto the outer surface of the capillary tube. The communications conductor (22) carrying the thermocouple will then extend through the passage (21) in the terminal member. Any additional sealing can be achieved in any suitable manner such as by the use of Teflon tape and O-rings.

Vertical alignment of the capillary tube can then be effected using the thumbwheel (5) in order to achieve the ideal/correct position for reflection X-ray diffraction. The relevant position required varies depending on the diameter of the capillary.

In use, consequent on the small volume and geometry of the capillary reaction chamber, no dead volumes form and a near ideal plug flow behaviour can generally be expected. This allows a quick change over of gases/atmospheres, e.g. from reactive to inert to interrupt reactions or to study the effect of different gas compositions. The well defined flow pattern also allows sampling of the exhaust gas stream and analysis to be carried out on activity, selectivity and even kinetic data in reaction studies. A separate experiment in a specifically designed laboratory scale fixed bed reactor to obtain such results becomes redundant as reaction data are collected simultaneously with the X-ray diffraction measurements.

It is to be noted that the materials used in the embodiment of the invention described above are inert to at least most possible feed streams and reaction products. There are also no limitations in conversion to avoid condensation of heavier reaction products. The materials used obviate problems associated with the oxidation of the beryllium windows which would lead to decreased X-ray diffraction visibility. The use of borosilicate glass capillaries provides a minimal contribution of the capillary material to the X-ray diffraction spectrum. The usage of non corroding materials allows the feeding/ formation of liquids and vapours without the danger of damaging the cell.

It is envisaged that use of a sample presentation device according to the invention will facilitate novel insights into phase and crystallite size changes of various materials at relevant operating conditions in very controlled environments. Due to its ability to provide reaction data (activity, selectivity, yields, etc.) the sample presentation device according to the invention also decreases the turn-over time in materials screening while supplying a more concise view on the studied system. Small sample volumes also reduce the cost of sample testing. Near ideal plug flow behaviour and lack of dead volumes also allows the collection of kinetic data in parallel with the X-ray diffraction studies, further saving time and money.

Direct temperature control with the thermocouple in the centre of the capillary increases accuracy and utility of the data obtained. Heating with infra red heaters as opposed to hot air guns as is normally done in synchrotron facilities increases the safety of the operation due to the localized power output of the infra red heaters.

The capillary tube presentation cell can be attached to every commercial X-ray diffactometer by simply adjusting or replacing the backing plate. No other adjustments to the design need to be made.

The invention therefore facilitates the application of capillaries as plug flow reactors in radiation-based analytical laboratory equipment such as commercial laboratory powder X-ray diffractometers.

The invention can, however, also be used at synchrotron facilities and make the lives of the users of such a facility easier too.

Numerous variations may be made to the embodiment of the invention described above without departing from the scope hereof. In particular, a possible extension of the device described is the option to move the capillary tube (or the whole cell) along the capillary axis. This would enable studies of local changes of material along this axis to be conducted, e.g. as a consequence of changes of concentration of educts and products along this axis during reaction work.

Further extensions of the concept may include advanced external control of the cell, including motorised capillary adjustment and system integrated temperature control fully synchronised with X-ray diffraction scans. A motorised oscillation by say +/- 90° of the capillary may be introduced as an added option in order to minimise effects of 'preferred crystal orientation'.

It is also possible to position the carrier horizontally as an alternative to the orientation described above. This would enable a study of compositional gradients of the material along this axis which may occur in catalytic reactions with high degrees of conversion of the feed material, that is to say, with severe concentration profiles.

## Claims

1. A sample presentation device for radiation-based analytical equipment comprising
a mounting base (1) configured for mounting on a particular item of radiation-based analytical equipment,
a carrier (3) carried by, and
adjustable in position relative to, the mounting base, an arm (9) extending from the carrier and having at its opposite end a terminal member (10) and wherein the carrier and terminal member each have coaxial connectors (11) for receiving two opposite end regions of a capillary tube (7) that forms, in use, a reaction cell,
and a radiant heater (12) radially offset from the axis of the coaxial connectors for heating, in use, the ercapillary tube mounted by way of the coaxial connectors,
wherein
the carrier and terminal member each have a flow path (15) passing therethrough and communicating with the coaxial connectors, the flow paths having associated with them heating means (18, 19) whereby the flow paths can be heated, in use,
and wherein the radiant heater is carried by the arm in a position radially opposite a region to be occupied by the central region of the capillary tube in use,
**characterized in that**
the length of the arm extends at generally right angles to the direction of adjustment of the carrier on the mounting base to enable alignment, or use, of the capillary tube with radiation emitted by the radiation-based analytical equipment to which the mounting base is attached,
and that the arrangement of the radially offset radiant heater provides for the sample presentation device to be used on a reflection basis in addition to an optional alternative transmission basis.

2. A sample presentation device as claimed in claim 1 in which the carrier and terminal member are each made of a solid block of thermally conductive material and are configured for receiving a removable heater insert.

3. A sample presentation device as claimed in either one of claims 1 or 2 in which the terminal member has a passage (21) generally coaxial with the connector for receiving a communications conductor (23) carrying a temperature sensor (23) at its end that is operatively located generally centrally within a capillary tube or alternatively at a suitable position outside of the capillary tube.

4. A sample presentation device as claimed in any one of the preceding claims in which a generally channel shaped reflective shield (13) is provided for directing radiation from the radiant heater towards a position to be occupied by a capillary tube, in use.

5. A sample presentation device as claimed in any one of the preceding claims in which the end of each flow path remote from its associated connector has an axis extending at right angles to that of the connector.

6. A sample presentation device as claimed in any one of the preceding claims in which the mounting base is a metal plate (1) shaped and configured for mounting on a particular item of radiation-based analytical equipment.

7. A sample presentation device as claimed in any one of the preceding claims in which the carrier is attached to the mounting base by way of a slide and guide arrangement (4) allowing adjustable positioning of the carrier on the mounting base along at least one axis.

8. A sample presentation device as claimed in any one of the preceding claims in which the arm is adjustable in position in the direction of its own length relative to either the carrier or the terminal member to facilitate installation and removal of a capillary tube between the connectors.

9. A sample presentation device as claimed in any one of the preceding claims in which each connector is a compression fitting for forming an effective seal between a body part (31) and an outer surface of a capillary tube (7) wherein the compression fitting comprises a body having a passage (33) therein, a cavity (34) coaxial with the passage for accommodating a seal, a generally cylindrical seal (35) accommodated within the cavity wherein the seal is made of a suitably deformable but incompressible material and has a bore passing axially through the seal for accommodating a capillary tube in use, a follower (36) movable into and out of the cavity in order to compress the seal in the axial direction, and a screw threaded cap for urging the follower into the cavity, wherein the follower and body have cooperating formations (37, 38) associated therewith whereby rotation of the follower relative to the body is prevented and movement of the follower relative to the body is permitted in an axial direction only.

10. A sample presentation device as claimed in claim 9, in which the cooperating formations include a pin (38) or key having its length extending parallel to the axis of the body and laterally offset therefrom with the pin or key cooperating with a hole (39) or groove in the body and a corresponding hole or notch in a flange (38) extending radially outwards from the periphery of the follower.

11. A sample presentation device as claimed in either one of claims 9 or 10 in which the outer diameter of the seal is equal to at least three times the diameter of the bore through it.

12. A sample presentation device as claimed in any one of claims 9 to 11, in which the seal is made of a suitable silicon rubber material.

## Patentansprüche

1. Probenpräsentiervorrichtung für ein strahlungsbasiertes Analysegerät, umfassend
eine Montageunterlage (1), die zur Montage an einem bestimmten Element des strahlungsbasierten Analysegeräts ausgelegt ist,
einen Träger (3), getragen und relativ zu der Montageunterlage positionseinstellbar durch
einen Arm (9), der sich von dem Träger aus erstreckt und an seinem entgegengesetzten Ende ein Anschlussteil (10) aufweist, und wobei der Träger und das Anschlussteil jeweils koaxiale Verbinder (11) zur Aufnahme zweier entgegengesetzter Endbereiche eines Kapillarrohrs (7), das im Gebrauch eine Reaktionszelle bildet, aufweisen,
und einen Heizstrahler (12),
der von der Achse der koaxialen Anschlüsse radial versetzt ist, zum Aufheizen des mittels der koaxialen Anschlüsse montierten Kapillarrohrs während der Benutzung,
wobei
der Träger und das Anschlussteil jeweils einen durch sie hindurchlaufenden und mit den koaxialen Verbindern verbundenen Strömungsweg (15) aufweisen, wobei die Strömungswege ihnen zugeordnete Heizmittel (18, 19) aufweisen, wodurch die Strömungswege während der Benutzung aufgeheizt werden können,
und wobei der Heizstrahler von dem Arm in einer Position radial gegenüber einem Bereich getragen wird, der während der Benutzung von dem zentralen Bereich des Kapillarrohrs eingenommen werden soll,
**dadurch gekennzeichnet, dass**
die sich Länge des Arms im Allgemeinen rechtwinklig zur Einstellrichtung des Trägers auf der Montageunterlage erstreckt, um die Ausrichtung oder Verwendung des Kapillarrohrs mit der Strahlung zu ermöglichen, die von dem strahlungsbasierten Analysegerät, an dem die Montageunterlage befestigt ist, emittiert wird,
und dass die Anordnung des radial versetzten Heizstrahlers vorsieht, dass die Probenpräsentiervorrichtung, zusätzlich zu einer wahlweisen alternativen Basis des Übertragens auf Basis von Reflexion verwendet wird.

2. Probenpräsentiervorrichtung nach Anspruch 1, wobei der Träger und das Anschlussteil jeweils aus einem massiven Block aus wärmeleitendem Material hergestellt sind und zur Aufnahme eines entfernbaren Heizeinsatzes ausgelegt sind.

3. Probenpräsentiervorrichtung nach einem der Ansprüche 1 oder 2, wobei das Endteil einen Durchgang (21), der im Allgemeinen koaxial mit dem Verbinder ist, zur Aufnahme eines kommunizierenden Leiters (23), der an seinem Ende einen Temperaturfühler (23) trägt, der im Allgemeinen zentral innerhalb eines Kapillarrohrs oder alternativ an einer geeigneten Position außerhalb des Kapillarrohrs angeordnet ist, aufweist.

4. Probenpräsentiervorrichtung nach einem der vorangehenden Ansprüche, wobei ein im Allgemeinen rinnenförmiger reflektierender Schirm (13) bereitgestellt ist, um die Strahlung von dem Heizstrahler auf eine während der Benutzung von einem Kapillarrohr einzunehmende Position zu richten.

5. Probenpräsentiervorrichtung nach einem der vorangehenden Ansprüche, wobei das Ende jedes Strömungsweges, das von seinem zugehörigen Verbinder entfernt ist, eine Achse aufweist, die sich rechtwinklig zu derjenigen des Verbinders erstreckt.

6. Probenpräsentiervorrichtung nach einem der vorangehenden Ansprüche, wobei die Montageunterlage eine Metallplatte (1) ist, die zur Montage an einem bestimmten Element eines strahlungsbasierten Analysegeräts geformt und ausgelegt ist.

7. Probenpräsentiervorrichtung nach einem der vorangehenden Ansprüche, wobei der Träger an der Montageunterlage mittels einer Gleit- und Führungsanordnung (4) befestigt ist, die eine einstellbare Positionierung des Trägers auf der Montageunterlage entlang mindestens einer Achse ermöglicht.

8. Probenpräsentiervorrichtung nach einem der vorangehenden Ansprüche, wobei der Arm entlang seiner Längsrichtung in Bezug auf entweder den Träger oder das Anschlussteil positionsverstellbar ist, um den Ein- und Ausbau eines Kapillarrohrs zwischen den Verbindern zu erleichtern.

9. Probenpräsentiervorrichtung nach einem der vorhergehenden Ansprüche, wobei jeder Verbinder eine Klemmringverschraubung zur Bildung einer wirksamen Abdichtung zwischen einem Körperteil (31) und einer Außenfläche eines Kapillarrohrs (7) ist, wobei die Klemmringverschraubung einen Körper mit einem Durchgang (33) darin, einen Hohlraum (34) koaxial zu dem Durchgang zur Aufnahme einer Dichtung, eine im Allgemeinen zylindrische Dichtung (35), die in dem Hohlraum aufgenommen ist, umfasst, wobei die Dichtung aus einem geeignet verformbaren, aber nicht komprimierbaren Material hergestellt ist und eine Bohrung, die axial durch die Dichtung hindurchläuft, zur Aufnahme eines Kapillarrohrs bei Gebrauch, einen Mitnehmer (36), der in den und aus dem Hohlraum bewegbar ist, um die Dichtung in axialer Richtung zusammenzudrücken, und eine Schraubgewindekappe, um den Mitnehmer in den Hohlraum zu drücken, aufweist, wobei der Mitnehmer und der Körper zusammenwirkende zugehörige Ausbildungen (37, 38) aufweisen, wobei eine Drehung des Mitnehmers relativ zu dem Körper verhindert wird und eine Bewegung des Mitnehmers relativ zu dem Körper nur in axialer Richtung erlaubt ist.

10. Probenpräsentiervorrichtung nach Anspruch 9, wobei die zusammenwirkenden Ausbildungen einen Stift (38) oder Schlüssel umfassen, dessen Länge sich parallel zur Achse des Körpers und seitlich davon versetzt erstreckt, wobei der Stift oder Schlüssel mit einem Loch (39) oder einer Nut im Körper und einem entsprechenden Loch oder einer Kerbe in einem Flansch (38), der sich vom Umfang des Mitnehmers radial nach außen erstreckt, zusammenwirkt.

11. Probenpräsentiervorrichtung nach einem der Ansprüche 9 oder 10, wobei der Außendurchmesser der Dichtung mindestens dem Dreifachen des Durchmessers der Bohrung durch die Dichtung entspricht.

12. Probenpräsentiervorrichtung nach einem der Ansprüche 9 bis 11, wobei die Dichtung aus einem geeigneten Silikonkautschukmaterial hergestellt ist.

## Revendications

1. Dispositif de présentation d'échantillon pour équipement analytique à base de rayonnement comprenant
une base de montage (1) configurée pour un montage sur un élément particulier d'équipement analytique à base de rayonnement,
un support (3) reposant sur la base de montage et dont la position est ajustable par rapport à celle-ci,
un bras (9) s'étendant depuis le support et possédant un élément terminal (10) au niveau de son extrémité opposée et dans lequel le support et l'élément terminal possèdent chacun des raccords coaxiaux (11) pour recevoir deux régions d'extrémité opposées d'un tube capillaire (7) qui forme, en utilisation, une cellule de réaction,
et un dispositif de chauffage radiant (12) décalé radialement par rapport à l'axe des raccords coaxiaux pour chauffer, en utilisation, le tube capillaire monté au moyen des raccords coaxiaux,
dans lequel le support et l'élément terminal sont traversés chacun par un trajet d'écoulement (15) communiquant avec les raccords coaxiaux, les trajets d'écoulement étant associés à des moyens de chauffage (18, 19) de sorte que les trajets d'écoulement peuvent être chauffés, en utilisation,
et dans lequel le dispositif de chauffage radiant est supporté par le bras dans une position radialement opposée à une région devant être occupée par la région centrale du tube capillaire en d'utilisation,
**caractérisé en ce que**
la longueur du bras s'étend généralement à angle droit par rapport à la direction d'ajustement du support sur la base de montage pour permettre un alignement, ou une utilisation, du tube capillaire avec un rayonnement émis par l'équipement analytique à base de rayonnement auquel la base de montage est fixée,
et **en ce que** l'agencement du dispositif de chauffage radiant à décalage radial permet au dispositif de présentation d'échantillon d'être utilisé sur une base de réflexion en plus d'une base de transmission alternative facultative.

2. Dispositif de présentation d'échantillon selon la revendication 1, dans lequel le support et l'élément terminal sont constitués chacun d'un bloc solide de matériau thermiquement conducteur et sont configurés pour recevoir un insert chauffant amovible.

3. Dispositif de présentation d'échantillon selon l'une quelconque des revendications 1 ou 2 dans lequel l'élément terminal présente un passage (21) généralement coaxial avec le raccord pour recevoir un conducteur de communication (23) portant un capteur de température (23) à son extrémité. qui est positionné de manière opérationnelle généralement de manière centrale dans un tube capillaire ou en variante dans une position appropriée à l'extérieur du tube capillaire.

4. Dispositif de présentation d'échantillon selon l'une quelconque des revendications précédentes, dans lequel un écran réfléchissant (13) généralement en forme de canal est prévu pour diriger le rayonnement provenant du dispositif de chauffage vers une position devant être occupée par un tube capillaire, en utilisation.

5. Dispositif de présentation d'échantillon selon l'une quelconque des revendications précédentes, dans lequel l'extrémité de chaque trajet d'écoulement à distance de son raccord associé a un axe s'étendant perpendiculairement à celui du raccord.

6. Dispositif de présentation d'échantillon selon l'une quelconque des revendications précédentes, dans lequel la base de montage est une plaque métallique (1) mise en forme et configurée pour être montée sur un élément particulier d'équipement analytique à base de rayonnement.

7. Dispositif de présentation d'échantillon selon l'une quelconque des revendications précédentes, dans lequel le support est fixé à la base de montage au moyen d'un agencement de glissière et de guidage (4) permettant un positionnement ajustable du support sur la base de montage le long d'au moins un axe.

8. Dispositif de présentation d'échantillon selon l'une quelconque des revendications précédentes, dans lequel le bras est ajustable en position dans la direction de sa propre longueur par rapport au support ou à l'élément terminal pour faciliter une installation et un retrait d'un tube capillaire entre les raccords.

9. Dispositif de présentation d'échantillon selon l'une quelconque des revendications précédentes, dans lequel chaque raccord est un raccord à compression pour former un joint d'étanchéité efficace entre une partie de corps (31) et une surface extérieure d'un tube capillaire (7) dans lequel le raccord à compression comprend un corps ayant un passage (33) en son sein, une cavité (34) coaxiale avec le passage pour recevoir un joint d'étanchéité, un joint d'étanchéité généralement cylindrique (35) logé à l'intérieur de la cavité, dans lequel le joint d'étanchéité est fait d'un matériau pouvant être déformé de manière adaptée mais incompressible et présente un alésage passant axialement à travers le joint d'étanchéité pour recevoir un tube capillaire en utilisation, un suiveur (36) pouvant être déplacé à l'intérieur et à l'extérieur de la cavité afin de comprimer le joint d'étanchéité dans la direction axiale, et un bouchon fileté pour pousser le suiveur jusque dans la cavité , dans lequel le suiveur et le corps ont des formations coopérantes (37, 38) associées à ceux-ci de sorte qu'une rotation du suiveur par rapport au corps est ainsi empêchée et un déplacement du suiveur par rapport au corps est autorisé uniquement dans une direction axiale.

10. Dispositif de présentation d'échantillon selon la revendication 9, dans lequel les formations coopérantes comprennent une broche (38) ou une clé dont la longueur s'étend parallèlement à l'axe du corps et décalée latéralement par rapport à celui-ci avec la broche ou la clé coïncident avec un trou (39) ou une rainure dans le corps et un trou ou une encoche correspondant dans une bride (38) s'étendant radialement vers l'extérieur à partir de la périphérie du suiveur.

11. Dispositif de présentation d'échantillon selon l'une quelconque des revendications 9 ou 10, dans lequel le diamètre extérieur du joint d'étanchéité est égal à au moins trois fois le diamètre de l'alésage le traversant.

12. Dispositif de présentation d'échantillon selon l'une quelconque des revendications 9 à 11, dans lequel le joint d'étanchéité est réalisé en un matériau de caoutchouc de silicone approprié.
